# EUROPEAN PATENT SPECIFICATION

(11) **EP 3 640 219 B1**
(45) Date of publication and mention of the grant of the patent: **20.04.2022**
(21) Application number: 18867307.3
(22) Date of filing: 04.10.2018
(51) Int. Cl.: C03B 33/03, B28D 1/14, B28D 7/04

(54) **DEVICE FOR MAKING HOLES IN GLASS PLATE**
VORRICHTUNG ZUR HERSTELLUNG VON LÖCHERN IN EINER GLASPLATTE
DISPOSITIF POUR FAIRE DES TROUS DANS UNE PLAQUE DE VERRE

(30) Priority: 30.03.2018 JP 2018070320
(43) Date of publication of application: 22.04.2020
(73) Proprietor: BANDO KIKO CO., LTD., Tokushima 770-0871 (JP)
(72) Inventor: TAKADA, Takeshi, Tokyo (JP)
(74) Representative: J A Kemp LLP
(86) International application number: PCT/JP2018/037286
(87) International publication number: WO 2019/187252

(56) References cited:
- EP-A1- 1 518 651
- WO-A1-2006/038283
- WO-A1-2015/037488
- CN-A- 103 042 608
- JP-A- S6 347 052
- JP-A- H05 193 966
- JP-A- S60 112 634
- JP-A- S62 223 031
- JP-A- 2004 351 655
- JP-A- 2006 160 604
- JP-U- S6 344 708

## Description

### TECHNICAL FIELD

The present invention relates to an apparatus for drilling holes in a glass plate according to the preamble of claim 1, in particular for forming holes (including recesses and through holes) in a glass plate used for an automobile window or the like.

### BACKGROUND ART

This type of apparatus for drilling holes in a glass plate includes a hole forming head for forming a through hole in a specific region of a glass plate, a supporting table having a supporting surface for supporting the glass plate in which the through hole is to be formed by this hole forming head, a rotating means for rotating the supporting surface of the supporting table with respect to the hole forming head, so as to dispose the specific region of the glass plate to a position which allows the formation of the through hole by the hole forming head, and a transporting means for carrying in onto the supporting table the glass plate in which the through hole is to be formed and carrying out from the supporting table the glass plate with the through hole formed therein.

EP 1 518 651 A1 discloses an apparatus for drilling a hole in a glass plate according to the preamble of claim 1, wherein said apparatus includes recess forming means for forming in a recess forming section a recess in an upper surface of a glass plate and forming therein a recess communicating with the recess in a lower surface of the glass plate; chamfering means for light-chamfering, in a chamfering section adjacent to the recess forming section, edges of opening of each of the recesses in the glass plate where the recesses have been formed by the recess forming means; and transporting means for consecutively transporting to the recess forming section the glass plates in which the recesses are to be formed and for consecutively transporting to the chamfering section the glass plates in which the recesses have been formed.

### PRIOR ART DOCUMENT

### PATENT DOCUMENT

[Patent Document 1] JP-A-2004-351655

### SUMMARY OF THE INVENTION

### PROBLEMS THAT THE INVENTION IS TO SOLVE

Incidentally, with such an apparatus for drilling holes in a glass plate, the glass plates are transported one plate at a time onto the supporting surface of the supporting table, the glass plate transported onto the supporting surface of the supporting table is fixed to that supporting surface, and the through hole is formed by the hole forming head with respect to the glass plate fixed to the supporting surface, so that productivity is low and such an apparatus is unsuitable for mass production.

In addition, in such an apparatus for drilling holes in a glass plate, in a case where a plurality of holes with different diameters are to be formed, it is necessary to change drills correspondingly on each occasion, so that productivity is low, and the apparatus is unsuitable for mass production from such a perspective.

The present invention has been devised in view of the above-described aspects, and its object is to provide an apparatus for drilling holes in a glass plate which makes it possible to enhance productivity and is suitable for mass production.

Another object of the present invention is to provide an apparatus for drilling holes in a glass plate which makes it unnecessary to change drills correspondingly on each occasion in a case where a plurality of holes with different diameters are to be formed, and which thereby makes it possible to enhance productivity and is suitable for mass production.

### MEANS FOR SOLVING THE PROBLEMS

An apparatus for drilling holes in a glass plate in accordance with the present invention is defined in claim 1.

According to such an apparatus for drilling holes in a glass plate in accordance with the present invention, there is provided a transporting and carrying-out device which concurrently transports onto the one supporting device the one glass plate in which the recess or the through hole is to be formed and onto the other supporting device the other glass plate in which the recess or the through hole is to be formed, respectively, and which concurrently carries out from the one supporting device the one glass plate with the recess or the through hole formed therein by the one hole forming device and from the other supporting device the other glass plate with the recess or the through hole formed therein by the other hole forming device, respectively. Therefore, it is possible to speedily form recesses or through holes in a multiplicity of glass plates. Hence, it is possible to enhance productivity, and speedy mass production of drilled glass plates is made possible.

According to such an apparatus for drilling holes in a glass plate in accordance with the present invention, a pair of supporting devices for supporting a glass plate is provided, one hole forming device and another hole forming device are provided for forming recesses or through holes in the glass plates supported by the respective supporting devices, and the transporting device is adapted to sequentially transport onto the one supporting device and the other supporting device the glass plate in which the recess or the through hole is to be formed. Therefore, it is possible to form recesses or through holes with different diameters without changing the drill of the hole forming device.

In the apparatus for drilling holes in a glass plate in accordance with the present invention, in a preferred example, each of the supporting devices has a supporting surface for supporting the glass plate, and each of the hole forming devices has a hole forming head for forming a recess or a through hole in the glass plate, a rotating means for rotating the supporting surface so as to dispose the respective region of the glass plate to a position which allows the formation of the recess or the through hole by the hole forming head, and a moving means for moving the hole forming head in a direction parallel to one surface of the glass plate relatively with respect to the glass plate on the supporting surface. In a preferred example, the hole forming head has a first recess forming device for forming a recess in one surface of the glass plate and a second recess forming device for forming in the other surface of the glass plate a recess communicating with the recess in the one surface of the glass plate.

In the apparatus for drilling holes in a glass plate in accordance with the present invention, in a preferred example, the peripheral edge shape of the supporting surface is similar to the peripheral edge shape of the glass plate, and the peripheral edge of the supporting surface has a shape which is located in such a manner as to be spaced apart a predetermined distance from the peripheral edge of the glass plate and continuously supports along the peripheral edge of the glass plate the vicinity of the peripheral edge.

### ADVANTAGES OF THE INVENTION

According to the present invention, it is possible to provide an apparatus for drilling holes in a glass plate which makes it possible to enhance productivity and is suitable for mass production.

In addition, according to the present invention, it is possible to provide an apparatus for drilling holes in a glass plate which makes it unnecessary to change drills correspondingly on each occasion in a case where a plurality of holes with different diameters are to be formed, and which thereby makes it possible to enhance productivity and is suitable for mass production.

### BRIEF DESCRIPTION OF THE DRAWINGS

Fig. 1 is an explanatory partial front elevational view of an embodiment of the invention;
Fig. 2 is another explanatory partial front elevational view of the embodiment of the invention;
Fig. 3 is still another explanatory partial front elevational view of the embodiment of the invention;
Fig. 4 is an explanatory side cross-sectional view of the embodiment shown in Figs. 1 to 3;
Fig. 5 is a diagram for explaining the operation of hole drilling in the embodiment shown in Figs. 1 to 4;
Fig. 6 is a diagram for explaining the operation of hole drilling in the embodiment shown in Figs. 1 to 4;
Fig. 7 is a diagram for explaining the operation of hole drilling in the embodiment shown in Figs. 1 to 4;
Fig. 8 is a diagram for explaining the operation of hole drilling in the embodiment shown in Figs. 1 to 4; and
Fig. 9 is an explanatory diagram of mainly a through hole in the embodiment shown in Figs. 1 to 4.

### MODE FOR CARRYING OUT THE INVENTION

Next, a description will be given of the mode for carrying out the invention on the basis of a preferred embodiment illustrated in the drawings. It should be noted that the present invention is not limited to the embodiment.

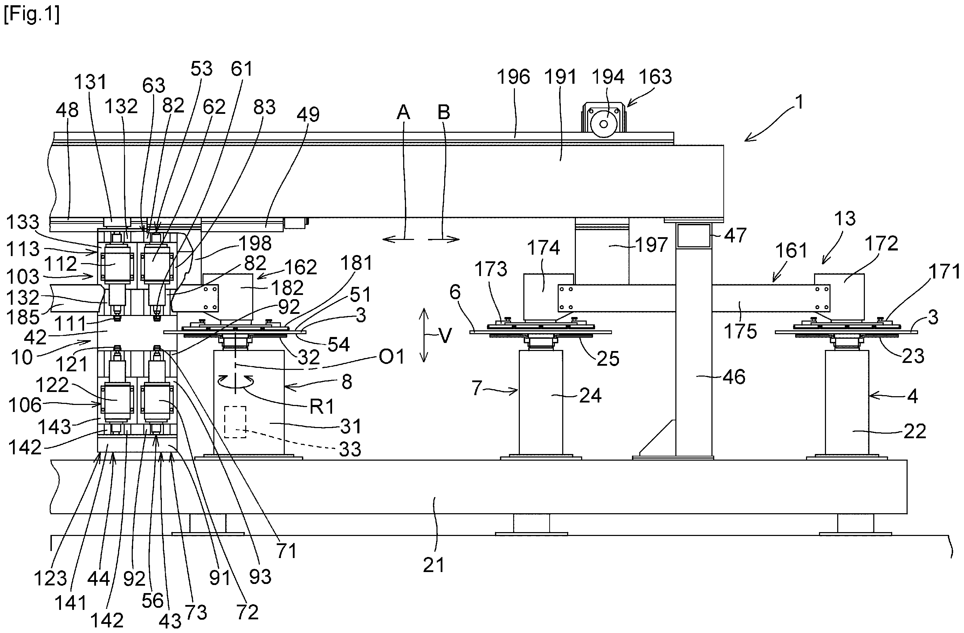

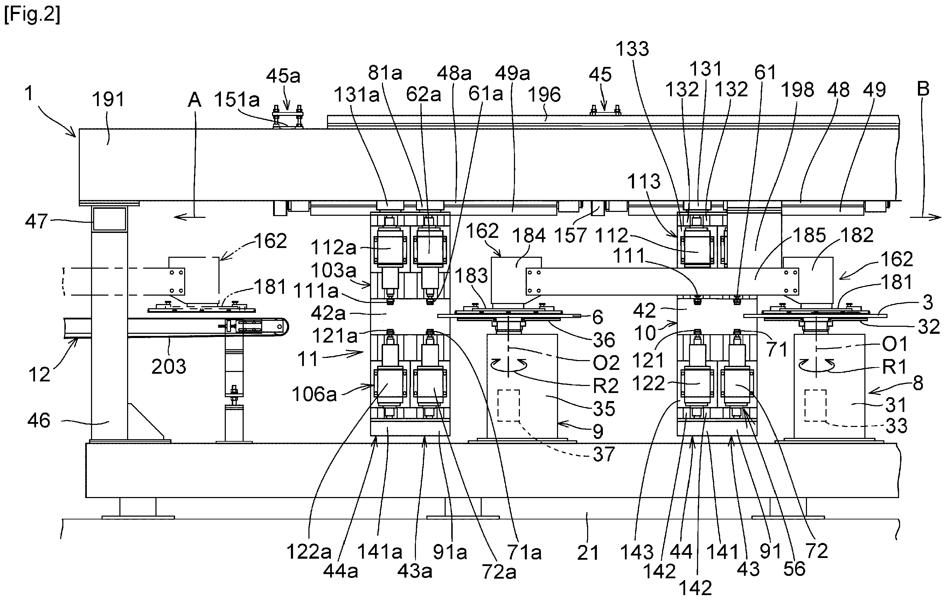

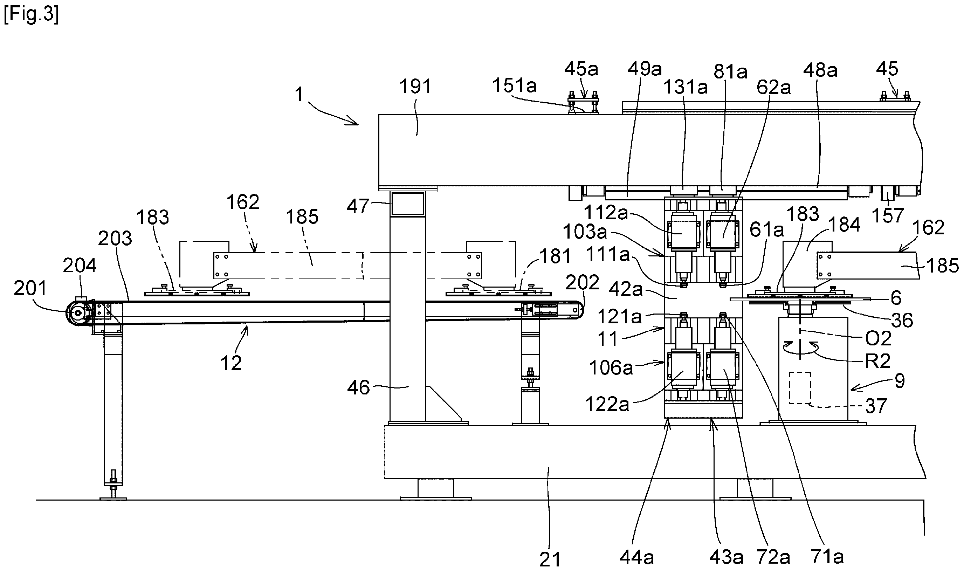

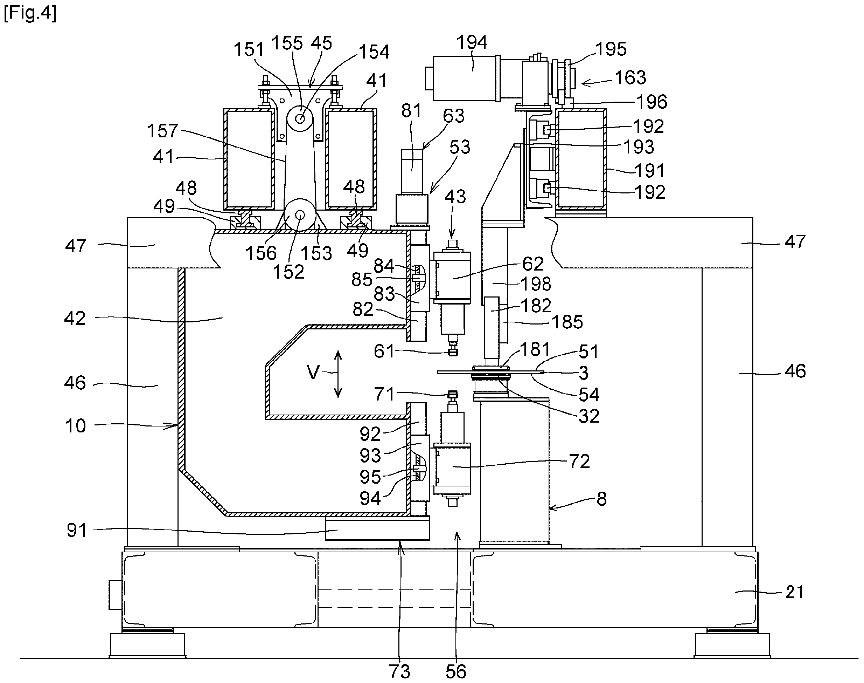

In Figs. 1 to 9, a hole drilling apparatus 1 in accordance with this embodiment is comprised of: a glass plate placing device 4 on which a glass plate 3 in which a recess or a through hole, i.e., in this embodiment a through hole 2, is to be formed is placed after being positioned from the outside manually or by a carrying-in machine (a carrying-in robot) or the like; a glass plate placing device 7 which is provided downstream of the glass plate placing device 4 in a transporting direction A of the glass plate 3 and on which a glass plate 6 in which a recess or a through hole, i.e., in this embodiment a through hole 5, is to be formed is placed after being positioned from the outside manually or by a carrying-in machine (a carrying-in robot) or the like; a supporting device 8 which is provided downstream of the glass plate placing device 7 in the transporting direction A of the glass plate 6 and supports the glass plate 3; a supporting device 9 which is provided downstream of the supporting device 8 in the transporting direction A and supports the glass plate 6; a hole forming device 10 for forming the through hole 2 in the glass plate 3 supported by the supporting device 8; a hole forming device 11 which is provided downstream of the hole forming device 10 in the transporting direction A and forms the through hole 5 in the glass plate 6 supported by the supporting device 9; and a transporting and carrying-out device 13 which concurrently transports the glass plate 3 placed on the glass plate placing device 4 onto the supporting device 8 on the upstream side in the transporting direction A and the glass plate 6 placed on the glass plate placing device 7 onto the supporting device 9 provided downstream of the supporting device 8 in the transporting direction A, respectively, and which concurrently carries out onto a conveyor device 12 the glass plate 3, with the through hole 2 formed therein by the hole forming device 10, from the supporting device 8 and the glass plate 6, with the through hole 5 formed therein by the hole forming device 11, from the supporting device 9, respectively.

The glass plate placing device 4 has a supporting column 22 erected on a base frame 21, as well as a placing table 23 with a suction disk mechanism which is provided on the upper surface of the supporting column 22 and sucks by air and fixes the glass plate 3 placed thereon. In the same way as the glass plate placing device 4, the glass plate placing device 7 disposed in such a manner as to be spaced apart from the glass plate placing device 4 on the downstream side in the transporting direction A also has a supporting column 24 erected on the base frame 21, as well as a placing table 25 with a suction disk mechanism which is provided on the upper surface of the supporting column 24 and sucks by air and fixes the glass plate 6 placed thereon. Each of the glass plates 3 and 6 in which each of the through holes 2 and 5 is to be formed is placed on each of the upper surfaces of the placing tables 23 and 25 from the outside manually or by a carrying-in machine (a carrying-in robot) or the like.

The supporting device 8 includes a supporting column 31 erected on the base frame 21; a supporting table 32 with a suction disk mechanism which is mounted on the supporting column 31 rotatably about a vertical axis O1 in a direction R1 and sucks by air and fixes the glass plate 3 supported thereby; and a rotating device 33 which is disposed inside the supporting column 31 and rotates the supporting table 32 about the vertical axis O1 in the direction R1. In the same way as the supporting device 8, the supporting device 9 disposed in such a manner as to be spaced apart from the supporting device 8 on the downstream side in the transporting direction A also includes a supporting column 35 erected on the base frame 21; a supporting table 36 with a suction disk mechanism which is mounted on the supporting column 35 rotatably about a vertical axis O2 in a direction R2 and sucks by air and fixes the glass plate 6 supported thereby; and a rotating device 37 which is disposed inside the supporting column 35 and rotates the supporting table 36 about the vertical axis O2 in the direction R2.

Since the hole forming device 10 and the hole forming device 11 are formed identically to each other, a detailed description will be given hereafter of the hole forming device 10. As for the hole forming device 11, a reference character a will be appended to identical reference numerals in the drawings, as required, and a detailed description thereof will be omitted.

The hole forming device 10 includes a movable base 42 which is suspended from a pair of horizontal frames 41 extending parallel to the transporting direction A, so as to be movable in the transporting direction A and in a returning direction B which is an opposite direction thereto (a backward direction or returning direction); a hole forming mechanism 43 provided on the movable base 42; a hole forming mechanism 44 provided on the movable base 42 downstream of the hole forming mechanism 43 in the transporting direction A; and a moving mechanism 45 for moving the movable base 42 in a direction parallel to the transporting direction A. The horizontal frames 41 are supported by a pair of supporting frames 47 respectively bridging two pairs of vertical frames 46 erected on the base frame 21. The movable base 42 is suspended from the lower surfaces of the horizontal frames 41 movably in the transporting direction A and the returning direction B through a suspending mechanism which has a pair of guide rail members 48 mounted on the lower surfaces of the horizontal frames 41 and extending parallel to the transporting direction A and a pair of sliders 49 which are respectively fitted to the pair of guide rail members 48 movably in the transporting direction A and the returning direction B and are mounted on the movable base 42. The hole forming mechanism 43 and the hole forming mechanism 44 are formed similarly to each other.

The hole forming mechanism 43 has a recess forming head 53 for forming a recess 52 in an upper surface 51 of the glass plate 3 and a recess forming head 56 for forming in a lower surface 54 of the glass plate 3 a recess 55 communicating with the recess 52.

The recess forming head 53 includes a recess forming drill 61 for forming the recess 52 by abutting against the upper surface 51 of the glass plate 3, a spindle motor 62 for rotating the recess forming drill 61, and a drill moving device 63 for moving the recess forming drill 61 in a direction perpendicular to the surface of glass plate 3, i.e., a vertical direction V in this embodiment. The recess forming drill 61 is connected to one end of an output rotating shaft of the spindle motor 62.

The recess forming head 56, which is formed in the same way as the recess forming head 53 and symmetrically with respect thereto about the vertical direction V, includes a recess forming drill 71 for forming the recess 55 by abutting against the lower surface 54 of the glass plate 3 and having the same diameter as that of the recess forming drill 61, a spindle motor 72 for rotating the recess forming drill 71, and a drill moving device 73 for moving the recess forming drill 71 in a direction perpendicular to the surface of glass plate 3, i.e., the vertical direction V in this embodiment. The recess forming drill 71, which is arranged in such a manner as to oppose the recess forming drill 61 in the vertical direction V, is connected to one end of an output rotating shaft of the spindle motor 72.

The drill moving device 63 includes an electric motor 81 provided on the movable base 42; a pair of guide rails 82 provided on the movable base 42 in such a manner as to extend in the vertical direction V; a slider 83 on which the spindle motor 62 is mounted and which is fitted to the guide rails 82 movably in the vertical direction V; a threaded shaft 84 which is provided rotatably on the movable base 42 between the pair of guide rails 82 in such a manner as to extend in the vertical direction V, and which is connected at one end thereof to an output rotating shaft of the electric motor 81; and a nut member 85 which is threadedly engaged with the threaded shaft 84 and is fixed to the slider 83. The drill moving device 63 is adapted to move the slider 83 in the vertical direction V, while being guided by the guide rails 82, through the nut member 85 by the rotation of the threaded shaft 84 as the electric motor 81 is operated, thereby allowing the recess forming drill 61 to approach the lower surface 54 of the glass plate 3 from the upper surface 51 thereof or move away therefrom.

The drill moving device 73 includes an electric motor 91 provided on the movable base 42; a pair of guide rails 92 provided on the movable base 42 in such a manner as to extend in the vertical direction V; a slider 93 on which the spindle motor 72 is mounted and which is fitted to the guide rails 92 movably in the vertical direction V; a threaded shaft 94 which is provided rotatably on the movable base 42 between the pair of guide rails 92 in such a manner as to extend in the vertical direction V, and which is connected at one end thereof to an output rotating shaft of the electric motor 91 via a bevel gear mechanism; and a nut member 95 which is threadedly engaged with the threaded shaft 94 and is fixed to the slider 93. The drill moving device 73 is adapted to move the slider 93 in the vertical direction V, while being guided by the guide rails 92, through the nut member 95 by the rotation of the threaded shaft 94 as the electric motor 91 is operated, thereby allowing the recess forming drill 71 to approach the upper surface 51 of the glass plate 3 from the lower surface 54 thereof or move away therefrom.

The hole forming mechanism 44 has a recess forming head 103 for forming a recess 102 in the upper surface 51 of the glass plate 3 and a recess forming head 106 for forming in the lower surface 54 of the glass plate 3 a recess 105 communicating with the recess 102.

The recess forming head 103 includes a large-diameter recess forming drill 111 which forms the recess 102 by cutting the glass plate 3 from the upper surface 51 by its rotation about the vertical axis and has a greater diameter than that of the recess forming drill 61, a spindle motor 112 for rotating the recess forming drill 111 about the vertical axis, and a drill moving device 113 for moving the recess forming drill 111 in the vertical direction V perpendicular to the surface of glass plate 3. The recess forming drill 111 is connected to one end of an output rotating shaft of the spindle motor 112.

The recess forming head 106, which is formed in the same way as the recess forming head 103 and symmetrically with respect thereto about the vertical direction V, includes a recess forming drill 121 which forms the recess 105 by cutting the glass plate 3 from the lower surface 54 by its rotation about the vertical axis and has the same diameter as that of the recess forming drill 111, a spindle motor 122 for rotating the recess forming drill 121 about the vertical axis, and a drill moving device 123 for moving the recess forming drill 121 in the vertical direction V perpendicular to the surface of glass plate 3. The recess forming drill 121 is connected to one end of an output rotating shaft of the spindle motor 122, and is arranged in such a manner as to oppose the recess forming drill 111 in the vertical direction V.

In the same way as the drill moving device 63, the drill moving device 113 includes an electric motor 131 provided on the movable base 42; a pair of guide rails 132 provided on the movable base 42 in such a manner as to extend in the vertical direction V; a slider 133 on which the spindle motor 112 is mounted and which is fitted to the guide rails 132 movably in the vertical direction V; a threaded shaft (not shown and corresponding to the threaded shaft 84 of the drill moving device 63) which is provided rotatably on the movable base 42 between the pair of guide rails 132 in such a manner as to extend in the vertical direction V, and which is connected at one end thereof to an output rotating shaft of the electric motor 131; and a nut member (not shown and corresponding to the nut member 85 of the drill moving device 63) which is threadedly engaged with this threaded shaft and is fixed to the slider 133. In the same way as the drill moving device 63, the drill moving device 113 is adapted to move the slider 133 in the vertical direction V, while being guided by the guide rails 132, through the unillustrated nut member by the rotation of the similarly unillustrated threaded shaft as the electric motor 131 is operated, thereby allowing the recess forming drill 111 to approach the lower surface 54 of the glass plate 3 from the upper surface 51 thereof or move away therefrom.

In the same way as the drill moving device 73, the drill moving device 123 includes an electric motor 141 provided on the movable base 42; a pair of guide rails 142 provided on the movable base 42 in such a manner as to extend in the vertical direction V; a slider 143 on which the spindle motor 122 is mounted and which is fitted to the guide rails 142 movably in the vertical direction V; a threaded shaft (not shown and corresponding to the threaded shaft 94 of the drill moving device 73) which is provided rotatably on the movable base 42 between the pair of guide rails 142 in such a manner as to extend in the vertical direction V, and which is connected at one end thereof to an output rotating shaft of the electric motor 141 via a bevel gear mechanism; and a nut member (not shown and corresponding to the nut member 95 of the drill moving device 73) which is threadedly engaged with this threaded shaft and is fixed to the slider 143. In the same way as the drill moving device 73, the drill moving device 123 is adapted to move the slider 143 in the vertical direction V, while being guided by the guide rails 142, through the unillustrated nut member by the rotation of the similarly unillustrated threaded shaft as the electric motor 141 is operated, thereby allowing the recess forming drill 121 to approach the upper surface 51 of the glass plate 3 from the lower surface 54 thereof or move away therefrom.

The moving mechanism 45 includes an electric motor 151 provided on the horizontal frames 41; a threaded shaft 152 which is rotatably supported at their respective end portions in the transporting direction A by the lower surfaces of the horizontal frames 41; a nut member 153 which is threadedly engaged with the threaded shaft 152 and is provided on the upper surface of the movable base 42; a pulley member 155 secured to an output rotating shaft 154 of the electric motor 151; a pulley member 156 secured to one end of the threaded shaft 152; and a belt member 157 wound around and traveled between the pulley members 155 and 156. The moving mechanism 45 is adapted to rotate the threaded shaft 152 through the pulley member 155, the belt member 157, and the pulley member 156 by the rotation of the output rotating shaft 154 as the electric motor 151 is operated, and the movable base 42 is moved in a direction parallel to the transporting direction A through the nut member 153 by the rotation of the threaded shaft 152.

The transporting and carrying-out device 13 includes a transporting device 161 which repeats the operation of concurrently transporting the glass plate 3 placed on the placing table 23 onto the supporting table 32 and the glass plate 6 placed on the placing table 25 onto the supporting table 36, respectively; a carrying-out device 162 which repeats the operation of pressing the glass plate 3 onto the supporting table 32 during the formation of the through hole 2 in the glass plate 3 carried in onto the supporting table 32 and pressing the glass plate 6 against the supporting table 36 during the formation of the through hole 5 in the glass plate 6 carried in onto the supporting table 36, and the operation of concurrently carrying out onto the conveyor device 12 the glass plate 3 with the through hole 2 formed therein from the supporting table 32 and the glass plate 6 with the through hole 5 formed therein from the supporting table 36, respectively; and a common reciprocating device 163 which reciprocatingly moves the transporting device 161 and the carrying-out device 162 in the transporting direction A and the returning direction B.

The transporting device 161 includes a suction disk device 171 which sucks the glass plate 3 placed on the placing table 23 and released from suction by the suction disk mechanism of that placing table 23, and releases the suction of the sucked glass plate 3 on the supporting table 32 to place that glass plate 3 on the supporting table 32; a vertically moving device 172 for moving the suction disk device 171 up and down in the vertical direction V, so that, in the suction of the glass plate 3 placed on the placing table 23, the suction disk device 171 is brought into contact with the upper surface 51 of the glass plate 3, while, in the transport of the glass plate 3 onto the supporting table 32, the glass plate 3 is moved away from the placing table 23 in the vertical direction V, whereas, upon arrival of the glass plate 3 to above the supporting table 32, the lower surface 54 of the glass plate 3 being sucked by the suction disk device 171 is brought into contact with the supporting table 32, while, in the return transfer in the returning direction B of the emptied suction disk device 171 to above the placing table 23 after transporting the glass plate 3 onto the supporting table 32, the emptied suction disk device 171 is moved away from the upper surface of the supporting table 32 in the vertical direction V; a suction disk device 173 which sucks the glass plate 6 placed on the placing table 25 and released from suction by the suction disk mechanism of that placing table 25, and releases the suction of the sucked glass plate 6 on the supporting table 36 to place that glass plate 6 on the supporting table 36; a vertically moving device 174 for moving the suction disk device 173 up and down in the vertical direction V, so that, in the suction of the glass plate 6 placed on the placing table 25, the suction disk device 173 is brought into contact with the upper surface 51 of the glass plate 6, while, in the transport of the glass plate 6 onto the supporting table 36, the glass plate 6 is moved away from the placing table 25 in the vertical direction V, whereas, upon arrival of the glass plate 6 to above the supporting table 36, the lower surface 54 of the glass plate 6 being sucked by the suction disk device 173 is brought into contact with the supporting table 36, while, in the return transfer in the returning direction B of the emptied suction disk device 173 to above the placing table 25 after transporting the glass plate 6 onto the supporting table 36, the emptied suction disk device 173 is moved away from the upper surface of the supporting table 36 in the vertical direction V; and a coupling member 175 for coupling the vertically moving devices 172 and 174 to each other.

The carrying-out device 162 includes a suction disk device 181 which presses the glass plate 3 onto the supporting table 32 during the formation by the hole forming device 10 of the through hole 2 in the glass plate 3 carried in onto the supporting table 32, sucks the glass plate 3 supported on the supporting table 32 after the formation of the through hole 2 and released from suction by the suction disk mechanism of that supporting table 32, and releases the suction of the glass plate 3 when the sucked glass plate 3 is transported to above the conveyor device 12; a vertically moving device 182 for moving the suction disk device 181 up and down in the vertical direction V, so that, in the suction by the suction disk device 181 of the glass plate 3 carried in onto the supporting table 32 by the transporting device 161, the suction disk device 181 is brought into contact with the upper surface 51 of the glass plate 3, while, in the carrying out of the glass plate 3 from the supporting table 32 onto the conveyor device 12, the glass plate 3 sucked by the suction disk device 181 is moved away from the supporting table 32 in the vertical direction V, whereas, upon arrival of the glass plate 3 to above the belt conveyor 12, the lower surface 54 of the glass plate 3 being sucked by the suction disk device 181 is brought into contact with the conveyor device 12, while, in the return transfer in the returning direction B of the emptied suction disk device 181 to above the table 32 after carrying out the glass plate 3 onto the conveyor device 12, the emptied suction disk device 181 is moved away from the upper surface of the conveyor device 12 in the vertical direction V; a suction disk device 183 which presses the glass plate 6 onto the supporting table 36 during the formation by the hole forming device 11 of the through hole 5 in the glass plate 6 carried in onto the supporting table 36, sucks the glass plate 6 supported on the supporting table 32 after the formation of the through hole 5 and released from suction by the suction disk mechanism of that supporting table 36, and releases the suction of the glass plate 6 when the sucked glass plate 6 is transported to above the conveyor device 12; a vertically moving device 184 for moving the suction disk device 183 up and down in the vertical direction V, so that, in the suction by the suction disk device 183 of the glass plate 6 carried in onto the supporting table 36 by the transporting device 161, the suction disk device 183 is brought into contact with the upper surface 51 of the glass plate 6, while, in the carrying out of the glass plate 6 from the supporting table 36 onto the conveyor device 12, the glass plate 6 sucked by the suction disk device 183 is moved away from the supporting table 36 in the vertical direction V, whereas, upon arrival of the glass plate 6 to above the belt conveyor 12, the lower surface 54 of the glass plate 6 being sucked by the suction disk device 183 is brought into contact with the conveyor device 12, while, in the return transfer in the returning direction B of the emptied suction disk device 183 to above the supporting table 36 after carrying out the glass plate 6 onto the conveyor device 12, the emptied suction disk device 183 is moved away from the upper surface of the conveyor device 12 in the vertical direction V; and a coupling member 185 for coupling the vertically moving devices 182 and 184 to each other.

The reciprocating device 163, which is provided on a horizontal frame 191 supported by the pair of supporting frames 47 and extending from the upstream side vertical frames 46 in the transporting direction A to the downstream side vertical frames 46 in the transporting direction A, includes a pair of guide rails 192 which are mounted on a side surface of the horizontal frame 191 in such a manner as to extend from the upstream side vertical frames 46 to the downstream side vertical frames 46 in parallel to the transporting direction A; a slider 193 which is fitted to the pair of guide rails 192 movably in the transporting direction A and the returning direction B; an electric motor 194 mounted on the slider 193; a gear 195 mounted on an output rotating shaft of the electric motor 194; rack teeth 196 meshing with the gear 195 and mounted on the upper surface of the horizontal frame 191 in such a manner as to extend from the upstream side vertical frames 46 to the downstream side vertical frames 46 in parallel to the transporting direction A; and upstream side and downstream side coupling members 197 and 198 mounted on the slider 193. The coupling member 175 is mounted on the coupling member 197, and the coupling member 185 is mounted on the coupling member 198.

The reciprocating device 163 is adapted to move, on the one hand, the coupling member 175 via the coupling member 197 and, on the other hand, the coupling member 185 via the coupling member 198, respectively, in a direction parallel to the transporting direction A, as the slider 193 is moved in the direction parallel to the transporting direction A while being guided by the guide rails 192 by following the rotation of the gear 195 meshing with the rack teeth 196 due to the operation of the electric motor 194.

The conveyor device 12 has an endless belt 203 stretched between a drive pulley 201 and a driven pulley 202, as well as a traveling device 204 constituted by an electric motor or the like for rotating the drive pulley 201. The conveyor device 12 is adapted to cause the endless belt 203 to travel by rotating the drive pulley 201 by the traveling device 204 when the glass plates 3 and 6 carried out onto the endless belt 203 are carried out manually or by a carrying-out machine (a carrying-out robot) or the like to the outside further downstream in the transporting direction A.

With the above-described hole drilling apparatus 1, the glass plate 3, which has been placed on the upper surface of the placing table 23 from the outside manually or by a carrying-in machine (a carrying-in robot) or the like and sucked and fixed thereon by the suction disk mechanism of the placing table 23, is sucked by the suction disk device 171 lowered by the vertically moving device 172 after being released from suction by the suction disk mechanism of the placing table 23. As the suction disk device 171 is raised in the vertical direction V by the vertically moving device 172, the glass plate 3 sucked by the suction disk device 171 is raised similarly in the vertical direction V and is moved away in the vertical direction V from the upper surface of the placing table 23. After this moving away, the glass plate 3 is transported to above the supporting table 32 as the suction disk device 171 is moved in the transporting direction A by means of the vertically moving device 172 and the coupling members 197 and 175 due to the operation of the electric motor 194. As the suction disk device 171 is lowered by the vertically moving device 172, the glass plate 3 transported to above the supporting table 32 is also lowered and is brought into contact with the supporting table 32. After this contact, as the suction by the suction disk device 171 is released, the glass plate 3 is placed on the supporting table 32 and is sucked and fixed onto the supporting table 32 by the suction disk mechanism of the supporting table 32. Meanwhile, the suction disk device 171, which became empty after placing the glass plate 3 on the supporting table 32, is returned to above the placing table 23 by being raised in the vertical direction V and by being moved in the returning direction B by means of the vertically moving device 172 and the coupling members 197 and 175 due to the operation of the electric motor 194. The glass plate 3 placed on the supporting table 32 is pressed onto the upper surface of the supporting table 32 by the suction disk device 181 due to the lowering of the suction disk device 181 which was returned to above the supporting table 32 by the movement in the returning direction B of the coupling members 198 and 185 and the vertically moving device 182 synchronized with the movement in the returning direction B of the suction disk device 171 due to the reverse operation of the electric motor 194.

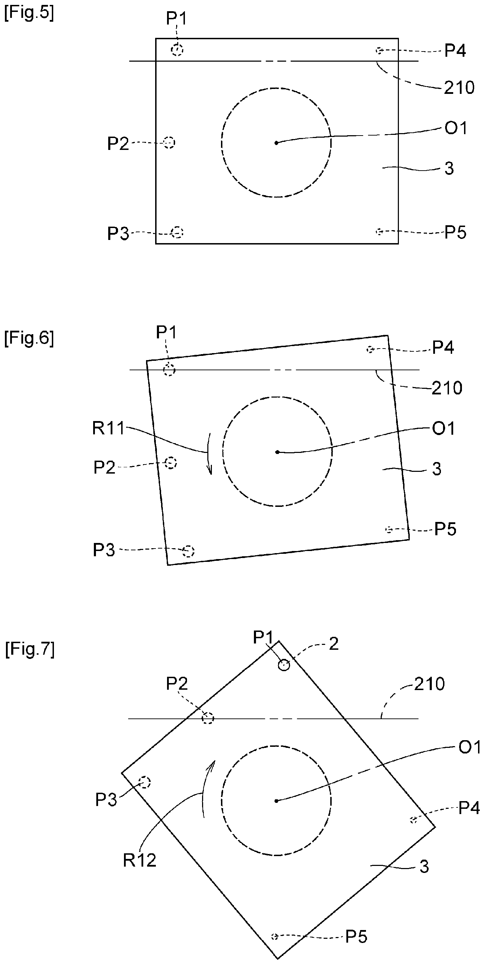

In the glass plate 3 which is pressed onto the upper surface of the supporting table 32 by the suction disk device 181 and sucked and fixed onto the supporting table 32 by the suction disk mechanism of the supporting table 32, in a case where a region P1, for example, which is a predetermined hole-drilling position of a large-diameter through hole 2 outside the ranges of the suction disk device 181 and the supporting table 32, is not positioned on a movable linear range line 210 in a direction parallel to the transporting direction A on which the recess forming drills 111 and 121 are movable by means of the moving mechanism 45, as shown in Fig. 5, that region P1 is positioned on the movable linear range line 210, as shown in Fig. 6, as the suction disk device 181 is temporarily raised and lowered in the vertical direction V and the supporting table 32 is rotated about the vertical axis O1 in a direction R11 by the operation of the rotating device 33 while the suction disk device 181 is temporarily being raised in the vertical direction V. After the positioning of the region P1 at the position shown in Fig. 6 and after the recess forming drills 111 and 121 are positioned at a position on the movable linear range line 210 corresponding in the vertical direction V to the position of the region P1 shown in Fig. 6 by the movement in the transporting direction A and the returning direction B of the movable base 42 due to the operation of the electric motor 151, the large-diameter through hole 2 constituted by the recesses 52 and 55 is formed at the region P1 by the recess forming drills 111 and 121 which are rotated by the spindle motors 112 and 122 on the basis of the movement of the spindle motors 112 and 122 in the vertical direction V due to the operation of the electric motors 131 and 141.

After the formation of the large-diameter through hole 2 at the region P1, in a case where a region P2, for example, which is a predetermined hole-drilling position of a next large-diameter through hole 2 outside the ranges of the suction disk device 181 and the supporting table 32, is not positioned on the movable linear range line 210 in the same way as the region P1, as shown in Fig. 5, that region P2 is positioned on the movable linear range line 210, as shown in Fig. 7, as the suction disk device 181 is temporarily raised and lowered in the vertical direction V and the supporting table 32 is rotated about the vertical axis O1 in a direction R12 by the operation of the rotating device 33 while the suction disk device 181 is temporarily being raised in the vertical direction V. After the positioning of the region P2 at the position shown in Fig. 7 and after the recess forming drills 111 and 121 are positioned at a position on the movable linear range line 210 corresponding in the vertical direction V to the position of the region P2 shown in Fig. 7 by the movement in the transporting direction A and the returning direction B of the movable base 42 due to the operation of the electric motor 151, the large-diameter through hole 2 constituted by the recesses 52 and 55 is formed at the region P2 by the recess forming drills 111 and 121 which are rotated by the spindle motors 112 and 122 on the basis of the movement of the spindle motors 112 and 122 in the vertical direction V due to the operation of the electric motors 131 and 141.

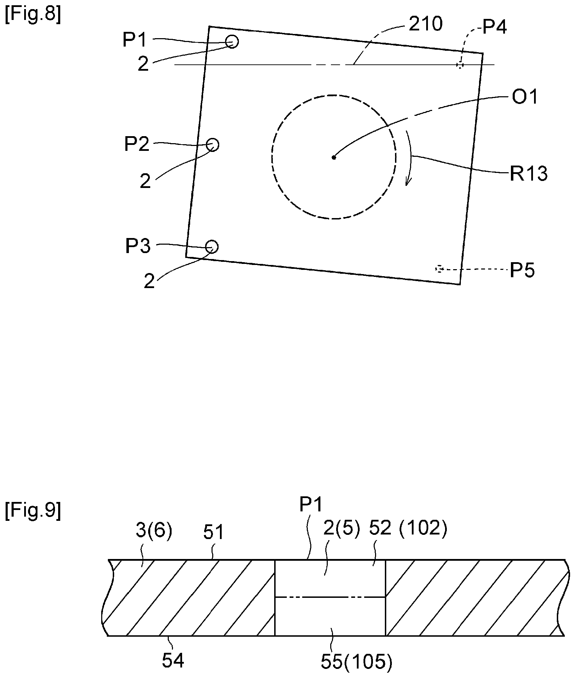

After the formation of the large-diameter through hole 2 at the region P2, in a case where a region P3, for example, which is a predetermined hole-drilling position of a next large-diameter through hole 2 outside the ranges of the suction disk device 181 and the supporting table 32, is not positioned on the movable linear range line 210 in the same way as the regions P1 and P2, as shown in Fig. 5, the large-diameter through hole 2 is also formed at the region P3 in the same way as the formation of the through holes 2 at the regions P1 and P2. Meanwhile, in a case where a region P4, for example, which is a predetermined hole-drilling position of a small-diameter through hole 2 outside the ranges of the suction disk device 181 and the supporting table 32, is not positioned on the movable linear range line 210 in the same way as the regions P1, P2, and P3, as shown in Fig. 5, that region P4 is positioned on the movable linear range line 210, as shown in Fig. 8, as the suction disk device 181 is temporarily raised and lowered in the vertical direction V and the supporting table 32 is rotated about the vertical axis O1 in a direction R13 by the operation of the rotating device 33 while the suction disk device 181 is temporarily being raised in the vertical direction V. After the positioning of the region P4 at the position shown in Fig. 8 and after the recess forming drills 61 and 71 are positioned at a position on the movable linear range line 210 corresponding in the vertical direction V to the position of the region P4 shown in Fig. 8 by the movement in the transporting direction A and the returning direction B of the movable base 42 due to the operation of the electric motor 151, the small-diameter through hole 2 constituted by the recesses 52 and 55 is formed at the region P4 by the recess forming drills 61 and 71 which are rotated by the spindle motors 62 and 72 on the basis of the movement of the spindle motors 62 and 72 in the vertical direction V due to the operation of the electric motors 81 and 91. After the formation of the small-diameter through hole 2 at the region P4, in a case where a region P5 which is a predetermined hole-drilling position of a next small-diameter through hole 2 is not positioned on the movable linear range line 210, the small-diameter through hole 2 is also formed at the region P5 in the same way as hole drilling at the region P4.

After the formation of the through holes at all the regions, the glass plate 3 is returned to its original rotational position shown in Fig. 5 as the suction disk device 181 is temporarily raised and lowered in the vertical direction V and the supporting table 32 is rotated in the direction R1 while the suction disk device 181 is temporarily being raised in the vertical direction V. The glass plate 3 which was returned to its original rotational position is sucked by the suction disk device 181 and is lifted up from the supporting table 32 as the suction disk device 181 is raised in the vertical direction V. The glass plate 3 which was raised from the supporting table 32 is carried out to above an endless belt 203 by the movement of the suction disk device 181 in the transporting direction A by means of the coupling members 198 and 185 due to the operation of the electric motor 194. The glass plate 3 which was carried out to above the endless belt 203 is placed on the endless belt 203 as the suction disk device 181 is lowered in the vertical direction V and is released from suction. In synchronism with the carrying out of the glass plate 3 from on the supporting table 32 onto the endless belt 203, a glass plate 3 which is newly placed on the upper surface of the placing table 23, is sucked by the suction disk device 171, and is transported to above the supporting table 32 as the suction disk device 171 is moved in the transporting direction A by the operation of the electric motor 194. The suction disk device 181, which became empty after placing the glass plate 3 on the endless belt 203, is returned to above the supporting table 32 by being raised in the vertical direction V and by being moved in the returning direction B by means of the coupling members 198 and 185 due to the operation of the electric motor 194 synchronized with the returning to above the placing table 23 of the suction disk device 171 which became empty after placing the glass plate 3 on the supporting table 32, and the foregoing operation is repeated.

Further, with the hole drilling apparatus 1, operation similar to that for the glass plate 3 is repeated for the glass plate 6 as well.

It should be noted that the above-described operation of the hole drilling apparatus 1 is carried out on the basis of control by a separately installed numerical control apparatus, and the rotating direction and the amount of rotation about the vertical axis O1 of the supporting table 32 due to the operation of the rotating device 33 for disposing on the movable linear range line 210 of the regions P1 to P5 which are predetermined hole-drilling positions in the hole drilling operation are stored in advance in the numerical control apparatus. The hole drilling apparatus 1 is adapted to perform drilling at the regions P1 to P5 of the predetermined hole-drilling positions of the glass plate 3 on the basis of the rotating direction and the amount of rotation stored in this control apparatus, and the same applies to the hole drilling with respect to the glass plate 6.

As described above, the hole drilling apparatus 1 is provided with the transporting and carrying-out device 13 which concurrently transports onto the supporting device 8 the glass plate 3 in which the through hole 2 is to be formed and onto the supporting device 9 the glass plate 6 in which the through hole 5 is to be formed, respectively, and which concurrently carries out from the supporting device 8 the glass plate 3 with the through hole 2 formed therein by the hole forming device 10 and from the supporting device 9 the glass plate 6 with the through hole 5 formed therein by the hole forming device 11, respectively. Therefore, it is possible to speedily form through holes including the through holes 2 and 5 in multiplicities of glass plates including multiplicities of glass plates 3 and 6. Hence, it is possible to enhance productivity, and speedy mass production of drilled glass plates is made possible.

In addition, with the hole drilling apparatus 1, since each of the hole forming devices 10 and 11 has the pair of hole forming mechanisms 43 and 44 as well as 43a and 44a, in a case where a plurality of holes with different diameters are to be formed, it is unnecessary to change the drills correspondingly on each occasion, which makes it possible to enhance the productivity and permits mass production.

In the above-described hole drilling apparatus 1 which includes the pair of supporting devices 8 and 9 for respectively supporting the glass plates 3 and 6 in which the through holes 2 and 5 are to be formed, the hole forming device 10 for forming the through hole 2 in the glass plate 3 supported by one supporting device 8 between the pair of supporting devices 8 and 9, and the hole forming device 11 for forming the through hole 5 in the glass plate 6 supported by the other supporting device 9 between the pair of supporting devices 8 and 9, the hole drilling apparatus 1 may be configured such that, for example, the glass plate 3 is sequentially transported onto the pair of supporting devices 8 and 9, and, on the supporting device 8 onto which the glass plate 3 has been transported, the through hole 2 is formed in the glass plate 3 by the hole forming device 10, while, on the supporting device 9 onto which the glass plate 3 has been transported next, the through hole 2 is consecutively formed in the glass plate 3 by the hole forming device 11.

### DESCRIPTION OF REFERENCE NUMERALS

- 1:: hole drilling apparatus
- 2, 5:: through hole
- 3, 6:: glass plate
- 4, 7:: glass plate placing device
- 8, 9:: supporting device
- 10, 11:: hole forming device
- 12:: conveyor device
- 13:: transporting and carrying-out device

## Claims

1. An apparatus for drilling holes in a glass plate (3,6), comprising:
one supporting device (8) for supporting one glass plate (3) in which a recess or a through hole is to be formed;
another supporting device (9) for supporting another glass plate (6) in which a recess or a through hole is to be formed;
one hole forming device (10) for forming the recess or the through hole in the one glass plate (3) supported by said one supporting device (8);
another hole forming device (11) for forming the recess or the through hole in the other glass plate (6) supported by said other supporting device (9); and
a transporting and carrying-out device (13) for transporting or carrying out the glass plate (3,6),
wherein:
(a) said transporting and carrying-out device (13) is adapted to concurrently transport onto said one supporting device (8) the one glass plate (3) in which the recess or the through hole is to be formed and onto said other supporting device (9) the other glass plate (6) in which the recess or the through hole is to be formed, respectively, and to concurrently carry out from said one supporting device (8) the one glass plate (3) with the recess or the through hole formed therein by said one hole forming device (10) and from said other supporting device (9) the other glass plate (6) with the recess or the through hole formed therein by said other hole forming device (11), respectively; or
(b) said transporting and carrying-out device (13) is adapted to sequentially transport onto said one supporting device (8) and said other supporting device (9) the glass plate in (3,6) which the recess or the through hole is to be formed;
wherein said one supporting device (8) includes a first supporting column (31) erected on a base frame (21); and a first supporting table (32) with a first suction disk mechanism which is mounted on the first supporting column (31) and sucks by air and fixes the glass plate (3) supported thereby,
wherein said other supporting device (9) disposed in such a manner as to be spaced apart from the supporting device (8) on the downstream side in the transporting direction, and includes a second supporting column (35) erected on the base frame (21); and a second supporting table (36) with a second suction disk mechanism which is mounted on the second supporting column (35) and sucks by air and fixes the glass plate (6) supported thereby,
**characterised in that** the first supporting table (32) with the first suction disk mechanism is mounted on the first supporting column (31) rotatably about a first vertical axis in a first direction; and the one supporting device (8) includes a first rotating device (33) which is disposed inside the first supporting column (31) and rotates the first supporting table (32) about the first vertical axis in the first direction, and
the second supporting table (36) with the second suction disk mechanism is mounted on the second supporting column (35) rotatably about a second vertical axis in a second direction; and the other supporting device (9) includes a second rotating device (37) which is disposed inside the second supporting column (35) and rotates the second supporting table (36) about the second vertical axis in the second direction.

2. The apparatus (1) for drilling holes in a glass plate according to claim 1, wherein said transporting and carrying-out device (13) is adapted to concurrently transport onto said one supporting device (8) the one glass plate (3) in which the recess or the through hole is to be formed and onto said other supporting device (9) the other glass plate (6) in which the recess or the through hole is to be formed, respectively, and to concurrently carry out from said one supporting device (8) the one glass plate (3) with the recess or the through hole formed therein by said one hole forming device (10) and from said other supporting device (9) the other glass plate (6) with the recess or the through hole formed therein by said other hole forming device (11), respectively, and at least one of said one hole forming device (10) and said other hole forming device (11) has a pair of hole forming mechanisms (43, 33, 43, 44a) which are formed identically to each other.

## Patentansprüche

1. Vorrichtung zum Bohren von Löchern in eine Glasplatte (3, 6), wobei die Vorrichtung Folgendes umfasst:
eine Stützvorrichtung (8) zum Stützen einer Glasplatte (3), in der eine Aussparung oder ein Durchgangsloch gebildet werden soll;
eine andere Stützvorrichtung (9) zum Stützen einer anderen Glasplatte (6), in der eine Aussparung oder ein Durchgangsloch gebildet werden soll;
eine Lochbildungsvorrichtung (10) zum Bilden der Aussparung oder des Durchgangslochs in der einen Glasplatte (3), die von der einen Stützvorrichtung (8) gestützt wird;
eine andere Lochbildungsvorrichtung (11) zum Bilden der Aussparung oder des Durchgangslochs in der anderen Glasplatte (6), die von der anderen Stützvorrichtung (9) gestützt wird; und
eine Transport- und Austragsvorrichtung (13) zum Transportieren oder Austragen der Glasplatte (3, 6),
wobei:
(a) die Transport- und Austragsvorrichtung (13) für Folgendes ausgelegt ist: gleichzeitiges Transportieren der einen Glasplatte (3), in der die Aussparung oder das Durchgangsloch gebildet werden soll, auf die eine Stützvorrichtung (8) und der anderen Glasplatte (6), in der die Aussparung oder das Durchgangsloch gebildet werden soll, auf die andere Stützvorrichtung (9), und gleichzeitiges Herausführen der einen Glasplatte (3), in der die Aussparung oder das Durchgangsloch durch die eine Lochbildungsvorrichtung (10) gebildet ist, aus der einen Stützvorrichtung (8) und der anderen Glasplatte (6), in der die Aussparung oder das Durchgangsloch durch die andere Lochbildungsvorrichtung (11) gebildet ist; aus der anderen Stützvorrichtung (9) oder
(b) die Transport- und Austragsvorrichtung (13) dafür ausgelegt ist, die Glasplatte (3, 6), in der die Aussparung oder das Durchgangsloch gebildet werden soll, nacheinander auf die eine Stützvorrichtung (8) und die andere Stützvorrichtung (9) zu transportieren;
wobei die eine Stützvorrichtung (8) Folgendes umfasst: eine erste Stützsäule (31), die auf einem Grundrahmen (21) errichtet ist; und einen ersten Stütztisch (32) mit einem ersten Saugscheibenmechanismus, der an der ersten Stützsäule (31) angebracht ist und die von ihm gestützte Glasplatte (3) ansaugt und fixiert,
wobei die andere Stützvorrichtung (9) in Transportrichtung stromabwärts von der Stützvorrichtung (8) beabstandet angeordnet ist und eine auf dem Grundrahmen (21) errichtete zweite Stützsäule (35) umfasst; und einen zweiten Stütztisch (36) mit einem zweiten Saugscheibenmechanismus, der an der zweiten Stützsäule (35) angebracht ist und die von ihm gestützte Glasplatte (6) ansaugt und fixiert,
**dadurch gekennzeichnet, dass** der erste Stütztisch (32) mit dem ersten Saugscheibenmechanismus an der ersten Stützsäule (31) um eine erste vertikale Achse in einer ersten Richtung drehbar gelagert ist; und die eine Stützvorrichtung (8) eine erste Drehvorrichtung (33) umfasst, die innerhalb der ersten Stützsäule (31) angeordnet ist und den ersten Stütztisch (32) um die erste vertikale Achse in der ersten Richtung dreht, und
der zweite Stütztisch (36) mit dem zweiten Saugscheibenmechanismus an der zweiten Stützsäule (35) um eine zweite vertikale Achse in einer zweiten Richtung drehbar gelagert ist; und die andere Stützvorrichtung (9) eine zweite Drehvorrichtung (37) umfasst, die innerhalb der zweiten Stützsäule (35) angeordnet ist und den zweiten Stütztisch (36) um die zweite vertikale Achse in der zweiten Richtung dreht.

2. Vorrichtung (1) zum Bohren von Löchern in eine Glasplatte nach Anspruch 1, wobei die Transport- und Austragsvorrichtung (13) für Folgendes ausgelegt ist:
gleichzeitiges Transportieren der einen Glasplatte (3), in der die Aussparung oder das Durchgangsloch gebildet werden soll, auf die eine Stützvorrichtung (8) und der anderen Glasplatte (6), in der die Aussparung oder das Durchgangsloch gebildet werden soll, auf die andere Stützvorrichtung (9), und gleichzeitiges Herausführen der einen Glasplatte (3), in der die Aussparung oder das Durchgangsloch durch die eine Lochbildungsvorrichtung (10) gebildet ist, aus der einen Stützvorrichtung (8) und der anderen Glasplatte (6), in der die Aussparung oder das Durchgangsloch durch die andere Lochbildungsvorrichtung (11) gebildet ist; aus der anderen Stützvorrichtung (9) oder wobei mindestens eine der einen Lochbildungsvorrichtung (10) und der anderen Lochbildungsvorrichtung (11) ein Paar von Lochbildungsmechanismen (43, 33, 43, 44a) aufweist, die identisch zueinander gebildet sind.

## Revendications

1. Appareil pour percer des trous dans une plaque de verre (3, 6), comprenant :
un premier dispositif de support (8) pour supporter une première plaque de verre (3) dans laquelle un évidement ou un trou traversant doit être formé ;
un autre dispositif de support (9) pour supporter une autre plaque de verre (6) dans laquelle un évidement ou un trou traversant doit être formé;
un premier dispositif de formation de trou (10) pour former l'évidement ou le trou traversant dans la plaque de verre (3) supportée par ledit dispositif de support (8) ;
un autre dispositif de formation de trou (11) pour former l'évidement ou le trou traversant dans l'autre plaque de verre (6) supportée par ledit autre dispositif de support (9) ; et
un dispositif de transport et de portage (13) pour transporter ou porter la plaque de verre (3, 6), dans lequel :
(a) ledit dispositif de transport et de portage (13) est adapté pour transporter simultanément sur ledit premier dispositif de support (8) la première plaque de verre (3) dans laquelle l'évidement ou le trou traversant doit être formé et sur ledit autre dispositif de support (9) l'autre plaque de verre (6) dans laquelle l'évidement ou le trou traversant doit être formé, respectivement, et pour porter simultanément à partir dudit premier dispositif de support (8) la première plaque de verre (3) avec l'évidement ou le trou traversant formé à l'intérieur par ledit premier dispositif de formation de trou (10) et à partir dudit autre dispositif de support (9) l'autre plaque de verre (6) avec l'évidement ou le trou traversant formé à l'intérieur par ledit autre dispositif de formation de trou (11), respectivement ; ou
(b) ledit dispositif de transport et de portage (13) est adapté pour transporter séquentiellement sur ledit premier dispositif de support (8) et ledit autre dispositif de support (9) la plaque de verre dans (3, 6) dont l'évidement ou le trou traversant doit être formé ;
dans lequel ledit premier dispositif de support (8) comprend une première colonne de support (31) érigée sur un cadre de base (21) ; et une première table de support (32) avec un premier mécanisme de disque d'aspiration qui est monté sur la première colonne de support (31) et aspire par l'air et fixe la plaque de verre (3) supportée par celle-ci,
dans lequel ledit autre dispositif de support (9) est disposé dans de manière à être espacé du premier dispositif de support (8) du côté aval dans la direction de transport, et comprend une deuxième colonne de support (35) érigée sur le cadre de base (21) ; et une deuxième table de support (36) avec un deuxième mécanisme de disque d'aspiration qui est monté sur la deuxième colonne de support (35) et aspire par l'air et fixe la plaque de verre (6) supportée par celle-ci,
**caractérisé en ce que** la première table de support (32) avec le premier mécanisme de disque d'aspiration est montée sur la première colonne de support (31) de manière rotative autour d'un premier axe vertical dans une première direction ; et le premier dispositif de support (8) comprend un premier dispositif rotatif (33) qui est disposé à l'intérieur de la première colonne de support (31) et fait tourner la première table de support (32) autour du premier axe vertical dans la première direction, et
la deuxième table de support (36) avec le deuxième mécanisme de disque d'aspiration est montée sur la deuxième colonne de support (35) de manière rotative autour d'un deuxième axe vertical dans une deuxième direction ; et l'autre dispositif de support (9) comprend un deuxième dispositif rotatif (37) qui est disposé à l'intérieur de la deuxième colonne de support (35) et fait tourner la deuxième table de support (36) autour du deuxième axe vertical dans la deuxième direction.

2. Appareil (1) pour percer des trous dans une plaque de verre selon la revendication 1, dans lequel ledit dispositif de transport et de portage (13) est adapté pour transporter simultanément sur ledit premier dispositif de support (8) la première plaque de verre (3) dans laquelle l'évidement ou le trou traversant doit être formé et sur ledit autre dispositif de support (9) l'autre plaque de verre (6) dans laquelle l'évidement ou le trou traversant doit être formé, respectivement, et pour effectuer simultanément à partir dudit premier dispositif de support (8) la première plaque de verre (3) avec l'évidement ou le trou traversant formé à l'intérieur par ledit premier dispositif de formation de trou (10) et à partir dudit autre dispositif de support (9) l'autre plaque de verre (6) avec l'évidement ou le trou traversant formé à l'intérieur par ledit autre dispositif de formation de trou (11), respectivement, et au moins l'un dudit premier dispositif de formation de trou (10) et dudit autre dispositif de formation de trou (11) a une paire de mécanismes de formation de trou (43, 33, 43, 44a) qui sont formés de manière identique les uns aux autres.
